# EUROPEAN PATENT APPLICATION

(11) **EP 2 405 047 A1**
(43) Date of publication of application: **11.01.2012**
(21) Application number: 10169072.5
(22) Date of filing: 09.07.2010
(51) Int. Cl.: D06B 3/04, B29B 15/12

(54) **Arrangement and method for wetting fibers with a fluid**

(71) Applicant: Siemens Aktiengesellschaft, 80333 München (DE)
(72) Inventor: Grove-Nielsen, Erik, 7870 Roslev (DK)

(57) **Abstract**

The present invention relates to an arrangement for wetting fibers with a fluid. The arrangement comprises a channel (8) adapted to guide one or more fibers (1) passing through the channel (8) from an inlet end (5) of the channel to an outlet end (6) of the channel. Fluid supply means (10,2) are coupled to the channel (8), wherein the fluid supply means (10,2) are adapted to contain a fluid. Suctioning means (9) are coupled to the channel (8) to suck the fluid supplied by the fluid supply means (10,2) into the channel in order to wet the one or more fibers (1) passing through.

Moreover, the present invention relates to a method for wetting fibers with a fluid comprising the steps of directing one or more fibers into and through a channel, evacuating the channel (8) and sucking the fluid into the channel (8) and holding the fluid in the channel while the one or more fibers are passing through the channel (8).

## Description

The invention relates to an arrangement and a method for wetting fibers with a fluid.

Fiber reinforced polymer composite materials are differentiated into composite materials comprising short fibers and composite materials comprising long or continuous fibers.

Continuous fibers are often used to produce bigger components of fiber reinforced polymeric material, for instance for the ship and plane industry, for containers and for wind turbine rotor blades.

By manufacturing those composite materials using polymers and structural reinforcement fibres, one of the difficulties is to obtain a sufficient penetration of the polymeric material into the fibres and a thorough embedding of the fibres with the polymeric material.

This penetration into or embedding of fibers with a liquid or molten material has been referred heretofore and will be referred here to as the "wetting" of fibers with a fluid. Thus, "wetting" of fibers does here also mean "impregnating" of fibers.

One of the known production techniques of fiber reinforced composite materials is the filament winding technique.

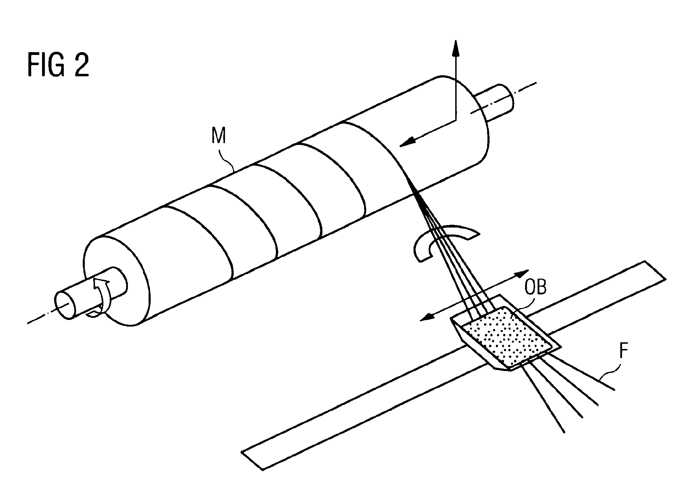

As shown in FIG 2, this technique uses filament fibers i.e. continuous fibers. A fiber bundle or a fiber strand F is wetted with a molten or liquid polymeric material and wound over a rotating mandrel M in specific orientations.

Alternatively, the wetted, tense fibers may be placed in a mould. Normally, the fibers are wetted by directing them through an open bath OB of polymeric material, as shown in FIG 2, or by leading them over a rotating drum with a wetted surface.

As a drawback of this production technique, the open wetting system exposes the workers to hazardous gases. In addition, cleaning of the arrangement is laborious, time-consuming and expensive.

Another drawback of this known arrangement is the fact that air is entrapped in the polymeric material which leads to a reduced quality of the wetted fibers and thus to reduced stiffness, strength and fatigue properties of the final fiber reinforced products.

Therefore it is the aim of the present invention to provide an improved arrangement and an improved method for wetting fibers with a fluid which is effective, not harmful to humans and the environment, and which provides a more thorough wetting of fibers than wetting arrangements and methods known in the art.

The aim of the invention is achieved by the features of claim 1 and claim 14.

Further aspects of the invention are subject of the dependent claims.

The present invention relates to an arrangement for wetting fibers with a fluid. The arrangement comprises a channel adapted to guide one or more fibers passing through the channel from an inlet end of the channel to an outlet end of the channel. Fluid supply means are coupled to the channel, wherein the fluid supply means are adapted to contain a fluid. Suctioning means are coupled to the channel to suck the fluid supplied by the fluid supply means in the channel in order to wet the one or more fibers passing through. Moreover, the present invention relates to a method for wetting fibers with a fluid. The method comprises the step of directing one or more fibers into and through a channel. In addition, the method comprises the step of evacuating the channel and sucking a fluid into the channel. Advantageously, by evacuating the channel, air or other gas molecules are removed. The fluid is drawn in or sucked into the channel at least partly using suctioning means, wherein the fluid is supplied or provided by fluid supply means.

Moreover the method comprises the step of holding or retainig the fluid in the channel while the one or more fibers are passing through the channel.

As an advantage of the inventive arrangement and method, neither the workers nor the environment are exposed to hazardous gases.

Another advantage of the inventive arrangement and method is the fact that the wetting quality and the efficiency of the inventive arrangement and method are enhanced compared to known wetting arrangements and methods.

Advantageously, the number and size of air entrapments in the fluid and in the final wetted fibers are reduced. Thus, the final fiber reinforced products have enhanced stiffness and strength and better fatigue properties.

In case a fiber bundle or a fiber strand being advanced through the channel, air between the single fibers of the bundle or the strand is also removed. Advantageously, this results in an improved wetting of these bundles or strands.

According to an embodiment of the invention, a high vacuum is generated in the channel which further improves the effect of removing air and better penetrating of the fluid into the fibers and embedding the fibers more thoroughly with the fluid. Advantageously according to embodiments of the invention, the wetting of the fibers is enhanced and/or accelerated by exposing the channel to ultrasonic waves and/or heating the channel and/or preheating the fibers.

The invention will be described by way of example in more detail in the following.

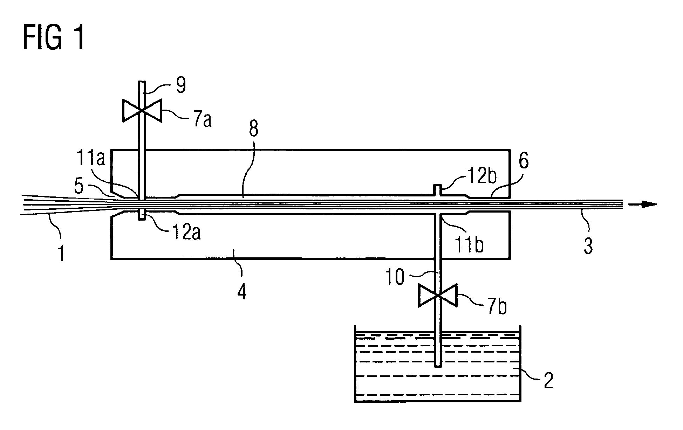

The drawing FIG 1 shows a preferred configuration and does not limit the scope of the invention.
**FIG 1** shows a cross-sectional view of an arrangement according to the invention.
**FIG 2** shows the aforementioned arrangement for wetting fibers with a fluid as known in the art.

As shown in **FIG 1** the arrangement comprises a wetting channel 8 having a fiber inlet end 5 and a fiber outlet end 6 and being enclosed by a wetting arrangement body 4.

The wetting channel 8 is adapted to guide one or more filament fibers 1 which are conveyed through the channel 8 from its inlet end 5 to its outlet end 6.

An inlet nozzle 5a is arranged at the fiber inlet end 5 and an outlet nozzle 6a is arranged at the fiber outlet end 6 of the wetting channel 8.

The fibers 1, i.e. a single filament fiber or a filament fiber bundle or a filament fiber strand, are inserted into the wetting channel 8 through the inlet nozzle 5a.

In case a fiber bundle 1 or a fiber strand 1 being inserted into the wetting channel 8, the fibers 1 are tightly pressed together at the inlet end 5 of the channel 8. Thus, air inflow into the wetting channel 8 is reduced.

The tense fibers 1 then pass the wetting channel 8 by being guided by the nozzles 5a,6a at both channel ends 5,6.

Thereafter, the fibers 1 leave the wetting channel 8 through the outlet nozzle 6a. Here, the fibers 1 may, for instance, be conveyed out of the wetting channel by pulling means like a roll or similar.

Although, single fibers, fiber bundles as well as fiber strands may be wetted in the wetting channel 8, the invention will be described in the following using the example of a fiber bundle 1 passing the channel 8, as shown in FIG 1.

In an embodiment of the invention, the inlet nozzle 5a is scalable according to the diameter of the fiber bundle 1 to wet. Likewise, the inlet nozzle 5a may be exchangeable to be chosen according to the diameter of the bundle 1.

In yet a further embodiment of the invention, the outlet nozzle 6a is scalable to achieve a wetted fiber bundle 1 with a predetermined fiber to fluid ratio. The outlet nozzle 6a may also be exchangeable to be chosen according to the required fiber to fluid ratio of the wetted fiber bundle 1.

Furthermore, the arrangement comprises fluid supply means 10,2. As shown in FIG 1, the fluid supply means 10,2 are connected to an opening 11b of the channel 8. The opening 11b forms a fluid entrance port of the wetting channel 8.

In an embodiment of the invention, shown in FIG 1, this opening 11b is located adjacent the outlet end 5 of the wetting channel 8 enabling a counter-current flow of fluid in relation to the advancing direction of the fiber bundle 1. The counter-current flow of fluid enhances the wetting of the fibers 1.

The fluid supply means 10,2 comprise a valve 7b to control the supply of fluid to the wetting channel 8. In a preferred embodiment of the invention, the valve 7b is able to be electrically controlled. However, the valve 7b could also be controlled manually or in another manner.

In addition, the fluid supply means 10,2 comprise a reservoir 2 or fluid tank 2, which is able and used to contain the fluid. The reservoir 2 is connected to the wetting channel 8 via a supply pipe 10, a supply duct 10 or similar.

In an embodiment of the invention, the reservoir 2 is arranged below the channel 8. Thus, rising air bubbles may easily be evacuated.

Generally, the fluid or wetting agent is a molten material or a solution. In a preferred embodiment of the invention, a molten polymeric material is used. The polymeric material is heated up until a predetermined viscosity is reached and then used to wet the fibers 1 passing trough the channel 8.

In another embodiment of the invention, the arrangement comprise heating means for heating the channel 8, which are not shown in FIG 1. The heating means are arranged in proximity of the wetting channel 8 and used to reduce the viscosity of the fluid in the channel 8.

Further heating means, which are not shown either, may form part of the arrangement for preheating the fibers before introducing them into the wetting channel 8.

Moreover, suctioning means 9 are coupled to the wetting channel 8. They are used to evacuate i.e. to vacuum the channel 8. Thus, air or other gas molecules are removed and at least a partial vacuum is generated in the wetting channel 8. The fluid is drawn in or sucked into the channel 8 by under-pressure and then retained in the wetting channel 8 while the fiber bundle 1 passes through the channel 8.

The suctioning means comprise a vacuum pump, which is not shown in FIG 1. Besides, the suctioning means may comprise a valve 7a to control the vacuum in the channel 8. In a preferred embodiment of the invention, the valve 7a is able to be electrically controlled. However, the valve 7a could also be controlled manually or in another manner.

As shown in FIG 1, the suctioning means 9 are connected to an opening 11a of the wetting channel 8. The opening 11a functions as an evacuating port of the channel 8. Preferably, this opening 11a is located adjacent the inlet end 5 of the channel 8. By connecting the suctioning means 9 to the channel 8 in proximity of the inlet end 5 and the fluid supply means 10,2 in proximity of the outlet end 6, the generation of a vacuum or under-pressure within the channel 8 is facilitated.

In an embodiment of the invention, the suctioning means are able to and used to generate a high vacuum in the wetting channel 8. The effect of pressing the fibers 1 tightly together and removing any gas from the channel 8 is improved by generating a high vacuum in the channel.

Moreover, the wetting channel 8 comprises a cavity arranged between the inlet end 5 and the outlet end 6 of the channel 8. The cavity is designed in a way that a vacuum can be generated in the cavity while the one or more fibers are directed into and/or advanced through the cavity.

For that, the volume of the cavity is bigger than the volume of the fibers 1 in the cavity in order to enable and facilitate the generation of a vacuum within the channel 8. Here "volume of the fibers 1 in the cavity" refers to the volume of the part of fibers which is in the cavity at the moment the vacuum is generated.

In a further embodiment of the invention, the arrangement comprises a recess 12b in the cavity located opposite to the aforementioned channel opening 11b for fluid supply, which is located adjacent the outlet end 5 of the wetting channel 8. The diameter and the depth of the recess 12b are approximately the same as the diameter of the opposite opening 11b. This recess 12b supports building up a stable fluid border in the channel 8.

In yet a further embodiment of the invention, the arrangement comprises a recess 12a in the cavity opposite to the aforementioned channel opening 11a located adjacent the inlet end 5 of the wetting channel 8. The diameter and the depth of this recess 12a are approximately the same as the diameter of the opposite channel opening 11a. This recess 12a supports the generation of a vacuum in the channel 8, which is at least a partial vacuum.

In a further embodiment of the invention, an ultrasonic emitter (not shown) is arranged in such a way that the wetting channel 8 can be exposed to ultrasonic waves in order to improve the wetting of the fibers 1.

Moreover, cooling means for cooling the wetted fibers (3) leaving the channel 8 may be provided in proximity of the fiber outlet end 5 of the channel 8.

As aforementioned, the one or more fibers 1 passing through the channel 8 may comprise a single filament fiber or a filament fiber bundle or a filament fiber strand.

The fibers 1 are selected of the group of glass fibers, carbon fibers, aramid fibers, metallic fibers and organic fibers.

The method for wetting fibers, according to the invention, comprises the step of directing one or more fibers 1 into and through a channel 8.

Moreover, the method comprises evacuating the channel 8 and sucking a fluid at least partly into the channel 8. Here, "evacuating the channel" means removing gas molecules from the volume of the channel in order to leave behind at least a partial vacuum.

The channel is evacuated by suctioning means 9, for instance a vacuum pump or a high vacuum pump. Besides, the fluid which is supplied by the fluid supply means 10,2 is drawn in or sucked into the channel by under-pressure.

The method further comprises the step of holding the fluid in the channel 8 while the one or more fibers 1 are passing through the channel 8.

In an embodiment of the invention, the method further comprises the step of controlling the traveling speed of the one or more fibers 1,3 and/or the vacuum condition in the channel 8 and/or the amount of fluid in the channel 8 and/or the viscosity of the fluid in order to improve the wetting of the fibers 1.

Any of these steps of controlling allow for improving the wetting of the fibers 1.

## Claims

1. Arrangement for wetting fibers with a fluid, comprising
- a channel (8) adapted to guide one or more fibers (1) passing through the channel (8) from an inlet end (5) of the channel (8) to an outlet end (6) of the channel (8); and
- fluid supply means (10,2) coupled to the channel (8), wherein the fluid supply means (10,2) are adapted to contain a fluid; and
- suctioning means (9) coupled to the channel (8) to suck the fluid supplied by the fluid supply means (10,2) into the channel (8) in order to wet the one or more fibers (1) passing through.

2. Arrangement according to claim 1,
- wherein emitting means are arranged in such a way that the channel (8) can be exposed to ultrasonic waves in order to improve the wetting of the fibers (1).

3. Arrangement according to claim 1 or 2,
- wherein heating means are provided to heat the channel (8) and/or preheat the fibers (1) in order to improve the wetting of the fibers (1).

4. Arrangement according to one of the preceding claims,
- wherein an inlet nozzle (5a) is arranged at the inlet end (5) of the channel (8) and/or an outlet nozzle (6a) is arranged at the outlet end (6) of the channel (8).

5. Arrangement according to claim 4,
- wherein the inlet nozzle (5a) is scalable or exchangeable according to the diameter of the one or more fibers (1) and/or wherein the outlet nozzle (6a) is scalable or exchangeable in order to achieve wetted fibers (3) with a predetermined fiber to fluid ratio.

6. Arrangement according to one of the preceding claims,
- wherein the suctioning means (9) and/or the fluid supply means (10,2) comprise a valve (7a,7b).

7. Arrangement according to one of the preceding claims,
- wherein the suctioning means (9) are connected to a first opening (11a) of the channel (8) which is located adjacent the inlet end (5) of the channel (8) and the fluid supply means (10,2) are connected to a second opening (11b) of the channel (8) which is located adjacent the outlet end (6) of the channel (8).

8. Arrangement according to one of the preceding claims,
- wherein the suctioning means (9) comprise a vacuum pump and/or the fluid supply means (10,2) comprise a reservoir (2).

9. Arrangement according to one of the preceding claims,
- wherein the channel (8) comprises a cavity arranged between the inlet end (5) and the outlet end (6) of the channel (8),
- wherein the cavity is designed in a way that a vacuum can be generated in the cavity while the one or more fibers (1) are directed into or advanced through the cavity.

10. Arrangement according to one of the preceding claims, - wherein the suctioning means (9) are able to generate a high vacuum in the channel (8).

11. Arrangement according to one of the preceding claims,
- wherein the one or more fibers (1) passing through the channel (8) comprise a single filament fiber or a filament fiber bundle or a filament fiber strand.

12. Arrangement according to one of the preceding claims,
- wherein the one or more filament fibers (1) passing through the channel (8) are selected of the group of continuous glass, carbon, aramid, metallic and organic fibers.

13. Arrangement according to one of the preceding claims,
- wherein the fluid comprises a solution or a melt, for instance a molten polymer material.

14. Method for wetting fibers with a fluid comprising the steps of
- directing one or more fibers (1) into and through a channel (8);
- evacuating the channel (8) and sucking a fluid at least partly into the channel (8) using suctioning means (9), wherein the fluid is supplied by fluid supply means (10,2);
- holding the fluid in the channel (8) while the one or more fibers (1) are passing through the channel (8).

15. Method according to claim 14, comprising the step of
- controlling the traveling speed of the one or more fibers (1,3) and/or the vacuum condition in the channel (8) and/or the amount of fluid in the channel (8) and/or the viscosity of the fluid in the channel (8).
